# EUROPEAN PATENT SPECIFICATION

(11) **EP 2 317 253 B1**
(45) Date of publication and mention of the grant of the patent: **23.10.2019**
(21) Application number: 10009570.2
(22) Date of filing: 14.09.2010
(51) Int. Cl.: F25B 45/00, F25B 13/00

(54) **Apparatus using refrigerant, and method for installing apparatus using refrigerant**
Vorrichtung mit Kühlmittel und Verfahren zur Installation der Vorrichtung mit dem Kühlmittel
Appareil utilisant un réfrigérant, et procédé d'installation de l'appareil utilisant un réfrigérant

(30) Priority: 29.10.2009 JP 2009249002
(43) Date of publication of application: 04.05.2011
(73) Proprietor: Mitsubishi Electric Corporation, Chiyoda-ku Tokyo 100-8310 (JP)
(72) Inventor: Shiba, Hirokuni, Tokyo 100-8310 (JP)
(74) Representative: Pfenning, Meinig & Partner mbB

(56) References cited:
- EP-A1- 1 278 032
- EP-A2- 0 961 086

## Description

### TECHNICAL FIELD

The present invention relates to an apparatus using a combustible refrigerant, such as an air-conditioning unit or a refrigeration unit, and more particularly, manufacture, shipment, storage, conveyance, and installation of the apparatus using the combustible refrigerant.

### BACKGROUND

Recently, as attention on global environment increases, refrigerant that does not much affect destruction of ozone layer or global warming and that exhibits a low global warming potential (hereinafter referred to as "GWP") has gained attention. As of the year 2009, attempts are made to establish regulations such that a low GWP refrigerant exhibiting a GWP of less than 150 should be used for vehicle air-conditioning units in Europe. Home air-conditioning units and business air-conditioning units are also required to use a low GWP refrigerant in order to prevent global warming. HC refrigerants exhibiting a low GWP of less than 150, such as propane, butane, and isobutene, and HFC refrigerants, such as HF01234yf, have gained attention. Meanwhile, propane, butane, and isobutene of the HC refrigerants are combustible refrigerants. Thus, when using the HC refrigerant, safety must be assured by avoiding occurrence of firing of the refrigerant. On the contrary, the HFC refrigerant, such as HF01234yf, is a slightly combustible refrigerant, and similarly, safety must be assured. There have hitherto been put forth many techniques for preventing occurrence of firing during operation of an air-conditioning unit or a refrigeration unit which operate by using the combustible refrigerant or the slightly combustible refrigerant. However, only are few techniques for preventing occurrence of firing during manufacturing, shipping, storing, conveying, and setting the air-conditioning unit or the refrigeration unit which operate by using the combustible refrigerant or the slightly combustible refrigerant have been put forth.

In related-art, there has been proposed a refrigerator including the following features (see; for example, JP-A-H09-229522 (pp. 2 to 5, Fig. 1)). Namely, an incombustible refrigerant is sealed into a refrigerant circuit of the refrigerator during storing and conveying processes. After the refrigerator has been installed at a safety location, the incombustible refrigerant is recovered outside of the refrigerator. Subsequently, an HC refrigerant which is a combustible refrigerant is sealed in the refrigerant circuit. By doing so, even if the refrigerator is dropped or toppled, or a fragile portion of the refrigerator, such as a pipe of the refrigerant circuit, is broken during the course of storage and conveyance of the refrigerator, only the incombustible refrigerant will leak. Hence, there is no possibility of occurrence of a fire accident.

Additionally, it is described in a related-art that a combustible refrigerant is sealed into the refrigerant circuit while an inside of an outdoor unit is held in a vacuum state or at a state near atmospheric pressure in a storing or conveying process (see; for example, JP-A-2000-46446 (pp. 3 to 5, Fig. 1)). Further, it is described that by doing so, even if the refrigerant leaks as a result of cracks having occurred in a pipe, or the like, for reasons of vibrations, or the like, in the storing or conveying process, a large quantity of combustible refrigerant will not leak, and therefore, possibility of occurrence of explosion or firing is extremely low.

In the method where the incombustible refrigerant is sealed into the refrigerant circuit during the storing or conveying process, operation for recovering the incombustible refrigerant at the time of installation of an air-conditioning unit or a refrigeration unit is not described in related-art and is a new operation. Thus, new problems such as increase in working time or workload during the installation work arise. Further, some refrigerant oil may also be recovered together with the recovery of the incombustible refrigerant, which will deteriorate reliability of an air-conditioning unit or a refrigeration unit. Further, when an inexperienced installation engineer recovers the incombustible refrigerant, the engineer may erroneously release the incombustible refrigerant into the atmosphere, which affects global warming.

Further, in the method where the combustible refrigerant is sealed in the refrigerant circuit in the storing and conveying processes while the inside of the outdoor unit is held in a vacuum state or at a state near atmospheric pressure, the outdoor units are densely stacked into layers. Therefore, even when an amount of refrigerant leaked from one unit is small, a total amount of leaked refrigerant becomes large, which in turn increase a possibility of occurrence of firing. Document EP 1 278 032 A1 relates to a refrigerant and oil collection operating method and to a refrigerant and oil collection control device, which can restrain the occurrence of various troubles when the existing interconnecting piping is reused by effectively.

### SUMMARY

An aspect of the present invention provides an apparatus according to claim 8 and a method according to claim 1 that assure safety in processes for manufacturing, shipping, storing, and conveying an air-conditioning unit or a refrigeration unit using a combustible or a slightly combustible refrigerant and that do not incur an increase in time or workload during the installation of the air-conditioning unit or the refrigeration unit.

According to an exemplary embodiment of the present invention, when installing an outdoor unit to be used for an air-conditioning unit or a refrigeration unit, where an incombustible refrigerant is previously sealed in a refrigerant circuit component part of the outdoor unit and the outdoor unit is shipped from a factory, on a place to be used, a combustible or slightly combustible refrigerant is additionally sealed into a refrigerant circuit while the incombustible refrigerant sealed before shipment remains sealed in the refrigerant circuit component part of the outdoor unit.

Accordingly, when installing an outdoor unit to be used for an air-conditioning unit or a refrigeration unit, where the incombustible refrigerant is previously sealed in the refrigerant circuit component part of the outdoor unit and the outdoor unit is shipped from a factory, on a place to be used, a required amount of combustible or slightly combustible refrigerant is additionally sealed in the refrigerant circuit while the incombustible refrigerant sealed before shipment remains sealed in the refrigerant circuit component part of the outdoor unit without being recovered, whereby the outdoor unit can perform air-conditioning operation or refrigerating operation. Therefore, it is possible to assure safety in processes for shipping, storing, and conveying an air-conditioning unit or a refrigeration unit using a combustible or slightly combustible refrigerant, thereby lessening workload incurred during installation.

### BRIEF DESCRIPTION OF DRAWINGS

Fig. 1 is a block diagram of an outdoor unit of a first exemplary embodiment of the present invention;
Fig. 2 is a refrigerant circuit diagram of an air-conditioning unit of the first exemplary embodiment of the present invention;
Fig. 3 (Fig. 3A, 3B and 3C) is an operation diagram of a gas pipe connection valve and a liquid pipe connection valve of the first exemplary embodiment of the present invention;
Fig. 4 is a refrigerant circuit diagram of a refrigeration unit of the first exemplary embodiment of the present invention;
Fig. 5 is a block diagram of another outdoor unit of the first exemplary embodiment of the present invention;
Fig. 6 is a process chart of manufacture, shipment, storage, conveyance, and installation of the air-conditioning unit of the first exemplary embodiment of the present invention;
Fig. 7 (Fig. 7A and 7B) is a detailed process chart pertaining to manufacture of an outdoor unit of the air-conditioning unit of the first exemplary embodiment of the present invention;
Fig. 8 (Fig. 8A and 8B) is a detailed process chart pertaining to manufacture of another outdoor unit of the air-conditioning unit of the first exemplary embodiment of the present invention;
Fig. 9 is a detailed process chart pertaining to installation and setup of the air-conditioning unit of the first exemplary embodiment of the present invention; and
Fig. 10 is a detailed process chart pertaining to installation and setup of another air-conditioning unit of the first exemplary embodiment of the present invention.

### DETAILED DESCRIPTION OF EXEMPLARY EMBODIMENTS

### First Exemplary Embodiment

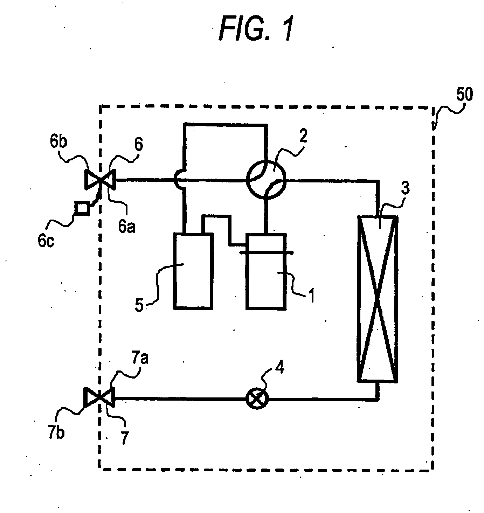

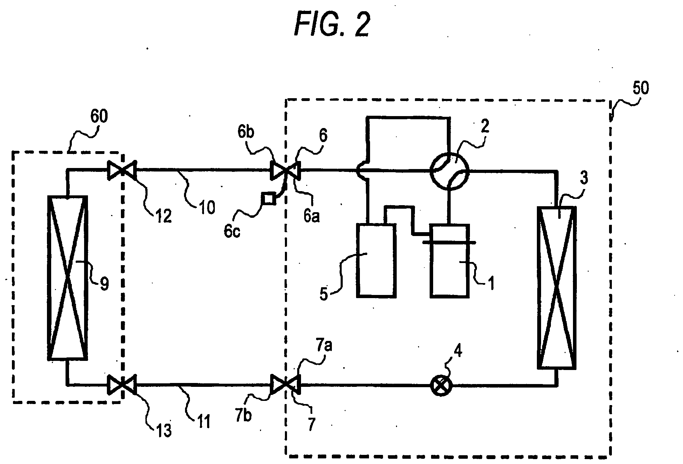

An exemplary embodiment of the present invention is hereunder described by reference to the drawings. Fig. 1 is a refrigerant circuit component part of an outdoor unit of an air-conditioning unit of the first exemplary embodiment of the present invention. A compressor 1, a four way valve 2, an outdoor heat exchanger 3, a decompressor 4, a liquid reservoir 5, a gas pipe connection valve 6, and a liquid pipe connection valve 7 are connected together by pipes, to thus be configured and housed in an outdoor unit 50 as a refrigerant circuit component part thereof. Fig. 2 is a view achieved when an indoor unit 60 of an air-conditioning unit and the outdoor unit 50 are connected together by a gas extension pipe 10 and a liquid extension pipe 11 and installed and set as an air-conditioning unit. An indoor heat exchanger 9, a gas pipe connecting port 12, and a liquid pipe connecting port 13 are connected to the indoor unit 60 by means of pipes, to thus be constituted and housed in the indoor unit 60 as a refrigerant circuit component part thereof. Specifically, the refrigerant circuit component part of the indoor unit 60 that air-conditions indoors is connected to the refrigerant circuit component part of the outdoor unit 50 by the gas extension pipe 10 and the liquid extension pipe 11, thereby making up a refrigerant circuit by which a combustible, low GWP HC refrigerant or a slightly combustible low GWP HFC refrigerant circulates through the indoor unit 60 and the outdoor unit 50.

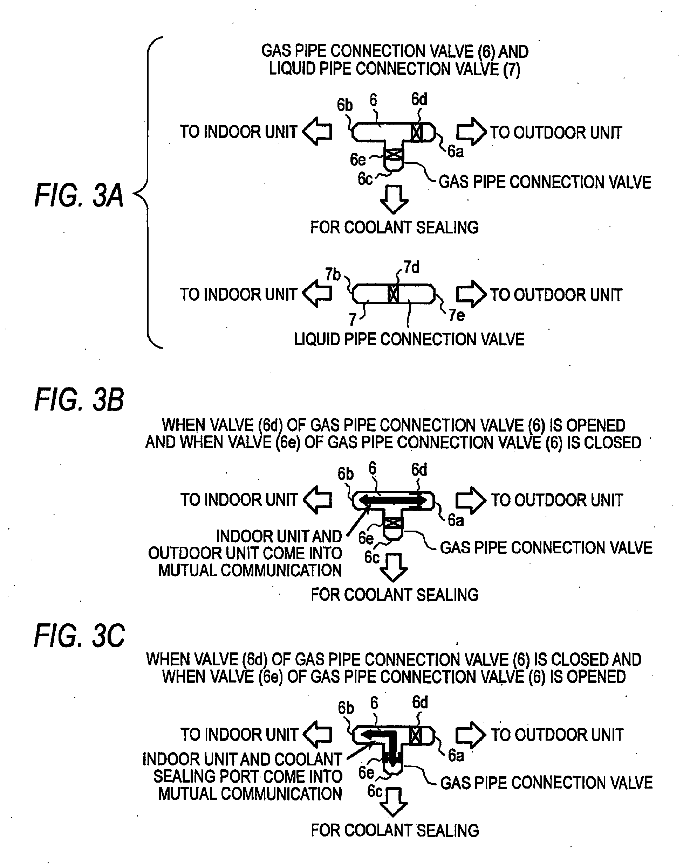

Fig. 3 is an enlarged view of the gas pipe connection valve 6 and the liquid pipe connection valve 7. The gas pipe connection valve 6 includes a pipe connecting port 6a connected to an interior pipe of the outdoor unit, a pipe connecting port 6b for connection with the gas extension pipe 10, and a refrigerant sealing connecting port 6c used at maintenance, such as sealing of a refrigerant. Switching valves 6d and 6e that can be opened and closed are provided in the gas pipe connection valve 6. The switching valve 6e remains closed except for a period of maintenance. When the switching valve 6d is opened, the refrigerant circuit component part of the outdoor unit 50 and the refrigerant circuit component part of the indoor unit 60 are brought into mutual communication by way of the gas extension pipe 10, whereupon refrigerant flows through the gas pipe connection valve 6. In a case where the outdoor unit 50 is solely conveyed while the gas extension pipe 10, the liquid extension pipe 11, and the indoor unit 60 are removed from the outdoor unit 50 as in case with factory shipment, the switching valve 6d of the gas pipe connection valve 6 is closed such that the refrigerant does not leak from the refrigerant circuit component part of the outdoor unit 50. When the outdoor unit 50 and the indoor unit 60 are connected by the gas extension pipe 10 and the liquid extension pipe 11, to thus be installed and set on site, and when the refrigerant is additionally sealed by way of the connecting port 6c or a vacuum is produced in the refrigerant circuit component part of the indoor unit 60 by connecting a vacuum pump to the connecting port 6c, the switching valve 6e is opened while the switching valve 6d is closed to thus perform operation for sealing a refrigerant or generating a vacuum. The switching valve 6e is closed after completion of operation. When circulation of the refrigerant is ready, the switching valve 6d is opened, to thus perform air-conditioning operation. The liquid pipe connection valve 7 is not provided with a connecting port equivalent to the refrigerant sealing connecting port 6c. Therefore, the liquid pipe connection valve 7 includes a port 7a connected to an interior pipe of the outdoor unit, a connecting port 7b for connection with the liquid extension pipe 11, and a switching valve 7d. When the switching valve 7d is opened, the refrigerant circuit component part of the outdoor unit 50 and the refrigerant circuit component part of the indoor unit 60 come into mutual communication by way of the liquid extension pipe 11, and the refrigerant flows through the liquid pipe connection valve 7. When the outdoor unit is solely conveyed as in the case of factory shipment, the switching valve 7d remains closed. When the outdoor unit is set and performs air-conditioning operation, the switching valve 7d is opened.

Circulation of a refrigerant in the refrigerant circuit is now described. For instance, during cooling operation, a low-pressure refrigerant sucked into the compressor 1 from the liquid reservoir 5 is compressed by the compressor 1, to thus become a high-temperature, high-pressure refrigerant. The refrigerant then flows into the outdoor heat exchanger 3 by way of the four way valve 2. The refrigerant flowed into the outdoor heat exchanger 3 exchanges heat with outdoor air of the outdoor unit 50, to thus become condensed, and then flows into the decompressor 4. The refrigerant thus flowed into the decompressor undergoes decompression in the decompressor 4, whereupon a temperature of the refrigerant decreases. The low-temperature, low-pressure refrigerant subjected to a temperature drop as a result of having been decompressed by the decompressor 4 is delivered to the indoor unit 60 by way of the liquid pipe connection valve 7 of the outdoor unit, the liquid extension pipe 11, and the liquid pipe connecting port 13 of the indoor unit. The refrigerant delivered to the indoor unit 60 flows into the indoor heat exchanger 9 and exchanges heat with indoor air of the indoor unit 60, to thus evaporate. The thus-evaporated refrigerant returns to the outdoor unit 50 by way of the gas pipe connecting port 12 of the indoor unit, the gas extension pipe 10, and the gas pipe connection valve 6 of the outdoor unit, to thus flow into the liquid reservoir 5 by way of the four way valve 2. By such a circulation of refrigerant in the refrigerant circuit, heat exchange between the refrigerant and air is performed in the indoor heat exchanger 9 in the indoor unit 60, thereby cooling the air of the indoor unit 60. Thus, air-conditioning operation is performed.

Further, during heating operation, the four way valve 2 switches a flow route of the refrigerant, thereby letting the indoor heat exchanger 9 condense the refrigerant and the outdoor heat exchanger 3 evaporate the refrigerant. Specifically, the refrigerant sucked from the liquid reservoir 5 and compressed by the compressor 1 flows into the indoor heat exchanger 9 by way of the four way valve 2, the gas pipe connection valve 6 of the outdoor unit, the gas extension pipe 10, and the gas pipe connecting port 12 of the indoor unit. The refrigerant flowed into the indoor heat exchanger 9 exchanges heat with the indoor air of the indoor unit 60 and becomes condensed. The refrigerant then flows into the decompressor 4 by way of the liquid pipe connecting port 13 of the indoor unit, the liquid extension pipe 11, and the liquid pipe connection valve 7 of the outdoor unit. The refrigerant subjected to a temperature drop as a result of having undergone decompression performed by the decompressor 4 is evaporated by the outdoor heat exchanger 3 and returns to the liquid reservoir 5 by way of the four way valve 2. By such a circulation of the refrigerant through the interior of the refrigerant circuit, heat exchange between the refrigerant and air is performed in the indoor heat exchanger 9 in the indoor unit 60, thereby heating the air of the indoor unit 60 and performing heating operation.

Incidentally, in the case of a cooling-only air-conditioning unit that does not require heating operation, the four way valve 2 can be omitted.

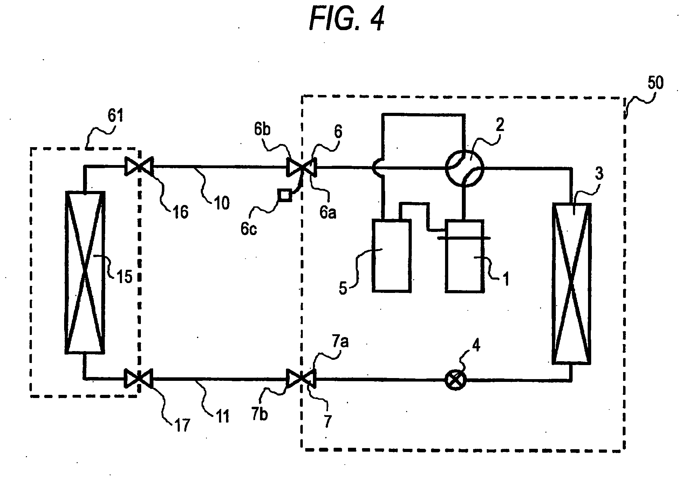

Fig. 4 is a view showing the outdoor unit of the present embodiment used as an outdoor unit for a refrigeration unit and installed and set. The outdoor unit 50 has the same circuit configuration as that of the outdoor units shown in Fig. 1 and 2; namely, the compressor 1, the four way valve 2, the outdoor heat exchanger 3, the decompressor 4, the liquid reservoir 5, the gas pipe connection valve 6, and the liquid pipe connection valve 7 are connected together by pipes, to thus be configured and housed in the outdoor unit 50 as a refrigerant circuit component part of the outdoor unit. Fig. 4 shows that the outdoor unit 50 and a freezer 61 for use in a refrigeration unit are connected together by means of the gas extension pipe 10 and the liquid extension pipe 11 and installed and set as a refrigeration unit. Other than a freezer, a refrigerator, a showcase, an automatic vending machine, and the like, are equivalent to the freezer 61. All of them are products having a refrigerant circuit of the same configuration. A heat exchanger 15 of the freezer, a gas pipe connecting port 16, and a liquid pipe connecting port 17 are connected to the freezer 61 by means of pipes, to thus configure a refrigerant circuit component part of the freezer 61 and are housed in the freezer 61. Specifically, the refrigerant circuit component part of the freezer 61 is connected to the refrigerant circuit component part of the outdoor unit 50 by way of the gas extension pipe 10 and the liquid extension pipe 11, thereby making up a refrigerant circuit by which the combustible low GWP HC refrigerant or the slightly combustible low GWP HFC refrigerant circulates through the freezer 61 and the outdoor unit 50. The gas pipe connection valve 6 and the liquid pipe connection valve 7 have the same structure and operate in the same manner as their counterparts shown in Fig. 3.

Circulation of the refrigerant through the interior of the refrigerant circuit will be described. The refrigerant sucked from the liquid reservoir 5 and compressed by the compressor 1 flows into the outdoor heat exchanger 3 by way of the four way valve 2. The outdoor heat exchanger 3 exchanges heat between refrigerant flowed into the outdoor heat exchanger 3 and outdoor air of the outdoor unit 50 and condenses the refrigerant, and the thus-condensed refrigerant flows into the decompressor 4. The decompressor 4 decompresses the inflow refrigerant, whereupon the temperature of the refrigerant drops. The refrigerant subjected to a temperature drop as a result of having undergone decompression performed by the decompressor 4 flows into the heat exchanger 15 of the freezer 61 by way of the liquid pipe connection valve 7 of the outdoor unit, the liquid extension pipe 11, and the liquid pipe connecting port 17 of the freezer 61. The refrigerant evaporated as a result of having exchanged heat with air in the freezer 61 flows into the liquid reservoir 5 by way of the gas pipe connecting port 16 of the freezing chamber 61, the gas extension pipe 10, the gas pipe connection valve 6 of the outdoor unit, and the four way valve 2. The air in the freezer 61 undergoes heat exchange by circulation of the refrigerant so that goods to be stored, such as food products, in the freezer 61 can be frozen. Even when the freezer 61 is a refrigerator that keeps goods to be stored, such as food products, cold, the refrigerator is identical with the freezer 61 in terms of configuration and system for circulating a refrigerant. When the freezer 61 is a freezer that freezes food products or a refrigerator that keeps the food products cold, the flow route of the refrigerant will not be required to be switched. Hence, the four way valve 2 can be omitted. However, in the case of a show case or an automatic vending machine, there may be a case where goods to be stored, such as food products, in the show case or the automatic vending machine are kept warm. For this reason, the flow route of the refrigerant is switched by the four way valve 2, thereby letting the heat exchanger 15 condense the refrigerant and the outdoor heat exchanger 3 evaporate the refrigerant. Circulation of the refrigerant in the refrigerant circuit is the same as that performed during heating operation. That is, the heat exchanger 15 heats air in the showcase or the automatic vending machine, whereby the goods in the showcase or the automatic vending machine are kept warm.

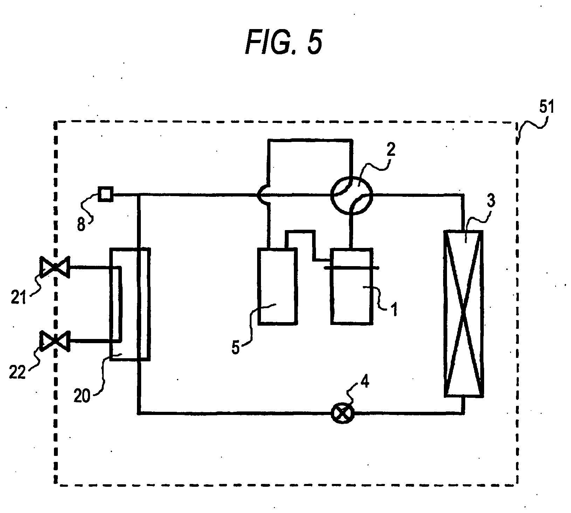

Fig. 5 is a refrigerant circuit of another outdoor unit of an air-conditioning unit of the first exemplary embodiment, which supplies hot water. The compressor 1, the four way valve 2, the outdoor heat exchanger 3, the decompressor 4, the liquid reservoir 5, a refrigerant sealing valve 8, and a load-side heat exchanger 20 are connected to each other pipes, whereby a refrigerant circuit is configured and housed in an outdoor unit 51 in such a way that a refrigerant circulates through the outdoor unit. Specifically, a refrigerant circuit through which the combustible low GWP refrigerant or a slightly combustible low GWP refrigerant circulates is built in the outdoor unit 51. In order to connect the indoor unit 60, or the like, the outdoor unit 50 has the gas pipe connection valve 6 and the liquid pipe connection valve 7, and a refrigerant sealing connecting port is provided on the gas pipe connection valve 6. However, the outdoor unit 51 is not equipped with the gas pipe connection valve 6 and the liquid pipe connection valve 7. Instead, the outdoor unit 51 additionally has the refrigerant sealing valve 8 for use in sealing a refrigerant. The load-side heat exchanger 20 is a heat exchanger that has pipe connecting ports 21 and 22 and that exchanges heat between the refrigerant and an antifreeze liquid, such as water, alcohol, and brine. For instance, when cooling/heating operation or a hot water supply involving circulation of water is performed, pieces of apparatus which are unillustrated, such as a supply source that is supplied with external water and a tank that supplies hot water generated by heating the water, are installed, and the pieces of apparatus are connected together by pipes. Specifically, the hot water generated by the load-side heat exchanger 20 is stored in the tank and used as a hot water supply, or the hot water is caused to circulate through the tank or a unit that air-conditions an indoor space, to thus be used for cooling/heating operation. When the hot water is used as a hot water supply, the essential requirement is to generate hot water, and switching of the four way valve 2 is not necessary. Therefore, the four way valve 2 can be omitted. Even when the indoor space is air-conditioned, if the air-conditioning unit is a cooling-only unit, the four way valve 2 will not be required to be switched and hence can be omitted.

Circulation of the refrigerant in the refrigerant circuit will be described. When hot water is generated as in the case with a hot water supply, the refrigerant sucked from the liquid reservoir 5 and compressed by the compressor 1 flows into the load-side heat exchanger 20 by way of the four way valve 2. The load-side heat exchanger 20 is configured such that water flowed from the pipe connecting port 21 exchanges heat with the refrigerant, thereby generating hot water, and then exits from a pipe connecting port 22. The pipe connecting port 22 is equipped with an unillustrated tank, and the tank is used for using generated hot water for a hot water supply or heating operation. When the hot water is used for air-conditioning such as heating, the thus-generated hot water may be circulated, that is, passing through an air-conditioning unit that air-conditions an indoor space and returning to the connecting port 21, as a secondary refrigerant. The refrigerant flowed into the load-side heat exchanger 20 exchanges heat with water, undergoes condensation, and then flows into the decompressor 4. The refrigerant subjected to temperature drop as a result of having been decompressed by the decompressor 4 is evaporated by the outdoor heat exchanger 3 and returns to the liquid reservoir 5 by way of the four way valve 2. Through such circulation of the refrigerant through the interior of the refrigerant circuit, the load-side heat exchanger 20 exchanges heat between the refrigerant and water, thereby generating hot water and providing a hot water supply or heating an indoor space. When the outdoor unit performs cooling operation as an air-conditioning unit, the four way valve 2 is switched, and the load-side heat exchanger 20 generates cold water, and the cold water is supplied as a secondary refrigerant to the indoor air-conditioning unit, whereby cooling operation is performed. In the case of a hot water supply that does not involve generation of cold water, the four way valve 2 is not switched and hence, is omitted. Likewise, when the indoor air-conditioning unit is solely for cooling purpose, switching of the four way valve 2 is not performed and hence, is omitted.

A refrigeration unit can also be configured by utilization of the configuration of the outdoor unit shown in Fig. 5. In this case, an antifreeze liquid, such as alcohol and brine, is used as a secondary refrigerant for the load-side heat exchanger 20. Pipes are connected to a freezer located outside the outdoor unit, or the like, by way of the connecting ports 21 and 22, such that the antifreeze liquid circulates.

Circulation of the refrigerant in the refrigerant circuit is the same as that performed during cooling operation. The antifreeze liquid cooled by the refrigerant in the load-side heat exchanger 20 is delivered as the secondary refrigerant to the freezer to cool air in the freezer and again returns to the load-side heat exchanger 20. Goods to be stored, such as food products, in the freezer are cooled. Even when the freezer is a refrigerator that keeps goods to be stored, such as food products, cold, the refrigerator is identical with the freezer in terms of configuration and system for circulating the refrigerant. However, when the freezer connected to the load-side heat exchanger 20 is a show case or an automatic vending machine, there may be a case where goods to be stored, such as food products, in the show case or the automatic vending machine will be kept warm. In this case, the flow route of the refrigerant is switched by the four way valve 2, thereby letting the load-side heat exchanger 20 heat the secondary refrigerant. Circulation of the refrigerant in the refrigerant circuit is the same as that performed for heating; namely, the secondary refrigerant heated by the refrigerant in the load-side heat exchanger 20 is delivered to the showcase or the automatic vending machine, thereby heating air in the showcase or the automatic vending machine and again returns to the load-side heat exchanger 20. Goods to be stored, such as food products, in the showcase or the automatic vending machine, are thereby kept warm. However, in the case of a freezer that freezes food products or a refrigerator that keeps the food products cold, neither the freezer nor the refrigerator are used for keeping the goods warm. Therefore, the flow route of the refrigerant does not need to be switched by switching the four way valve 2, and therefore, the four way valve 2 is omitted.

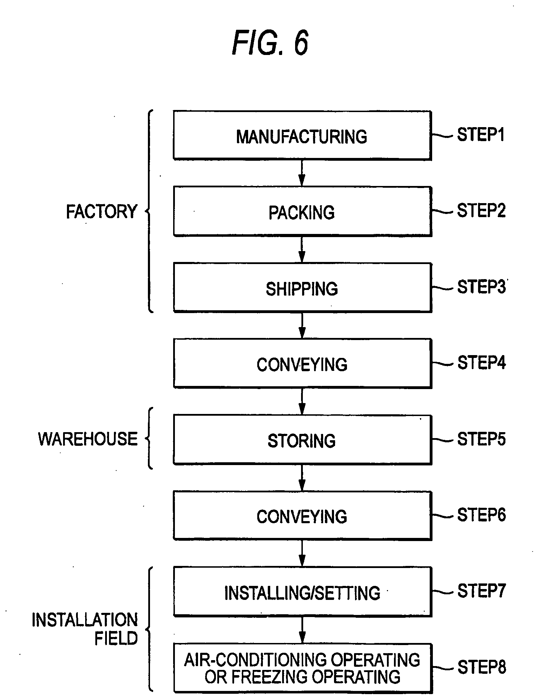

Next, Fig. 6 shows general procedures from manufacturing an air-conditioning unit or a refrigeration unit to performing air-conditioning or refrigerating operation. In Fig. 6, STEP 1 is a manufacturing step for manufacturing an air-conditioning unit or a refrigeration unit in a factory; STEP 2 is a packing step of packing the manufactured air-conditioning unit or refrigeration unit; STEP 3 is a shipping step of shipping the air-conditioning unit or the refrigeration unit from the factory; STEP 4 is a conveying step of conveying the air-conditioning unit or the refrigeration unit from the factory to a warehouse; STEP 5 is a storing step of storing the air-conditioning unit or the refrigeration unit in the warehouse; STEP 6 is a conveying step of conveying the air-conditioning unit or the refrigeration unit from the warehouse to a place where the user is to use the air-conditioning unit or the refrigeration unit; STEP 7 is an installation/setup step of installing or setting the air-conditioning unit or the refrigeration unit at the place where the user is to use the air-conditioning unit or the refrigeration unit; and STEP 8 is an operation check step of actually letting the air-conditioning unit or the refrigeration unit operate, thereby checking whether or not an abnormity is in the setup apparatus or setup operation.

The above descriptions are about the steps of manufacturing the air-conditioning unit or the refrigeration unit using the outdoor unit 50. However, the same steps and sequence apply to the case of an air-conditioning unit or a refrigeration unit using the outdoor unit 51.

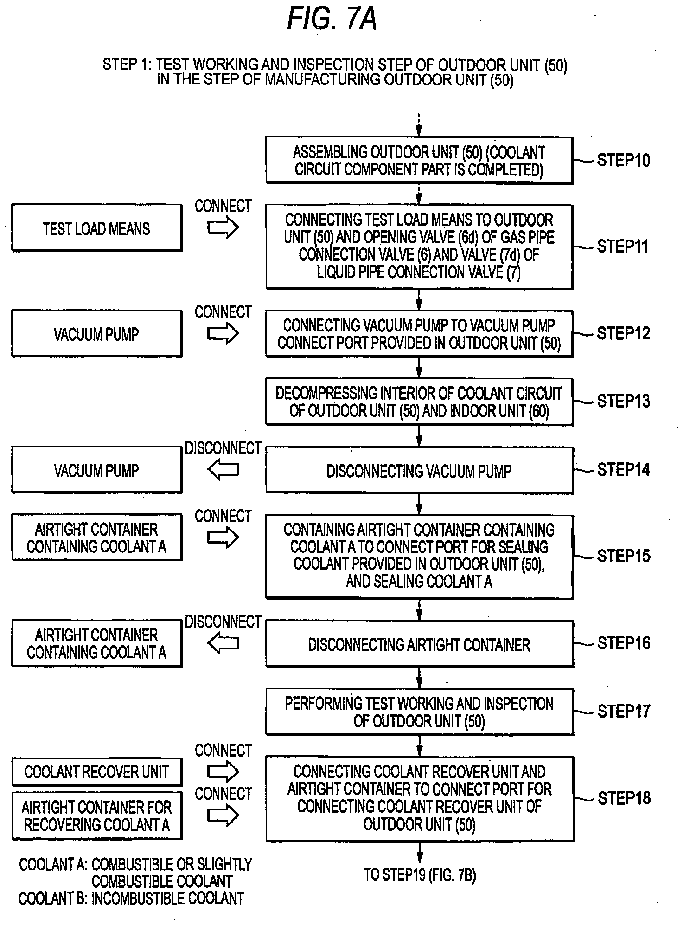

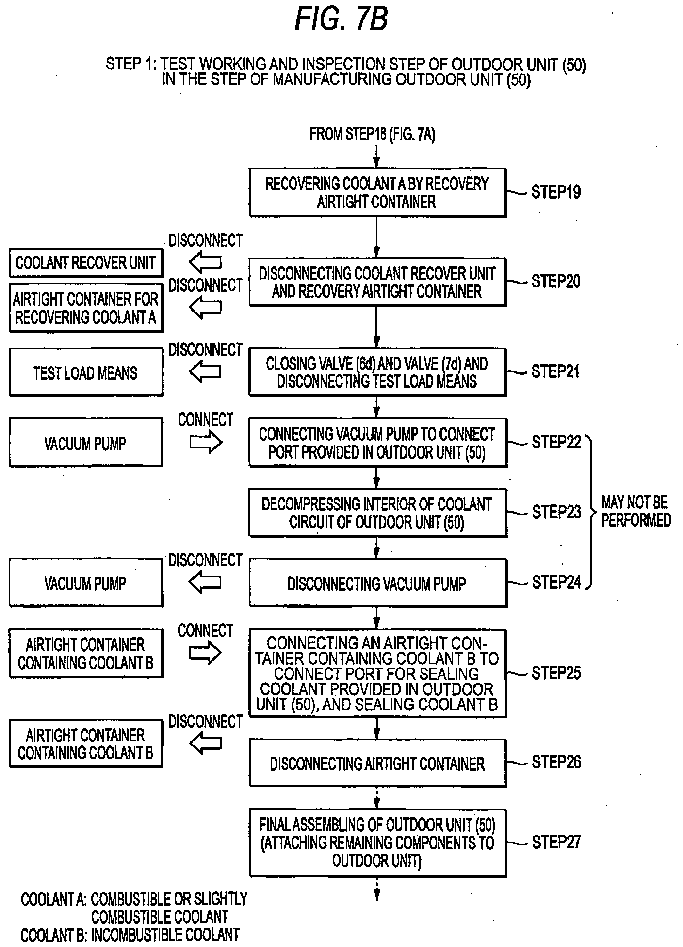

Fig. 7 shows steps employed before and after test working and inspection in the step of manufacturing an outdoor unit. The step of manufacturing an outdoor unit corresponds to STEP 1 shown in Fig. 6. STEP 11 to STEP 16 designate preparation steps preceding a test for sealing a test refrigerant in the outdoor unit. STEP 17 designates a test working/inspection step, and STEP 18 to STEP 26 designate post-processing steps of recovering the refrigerant, or the like. In Fig. 7, a refrigerant A described in connection with STEP 15 to STEP 20 designates a combustible or a slightly combustible refrigerant, and a refrigerant B described in connection with STEP 25 and STEP 26 designates an incombustible refrigerant. As shown in Fig. 1, STEP 10 designates a final step in which the compressor 1, the four way valve 2, the outdoor heat exchanger 3, the decompressor 4, the liquid reservoir 5, the gas pipe connection valve 6, and the liquid pipe connection valve 7 are connected to the outdoor unit 50 by way of pipes, thereby assembling a refrigerant circuit component part of the outdoor unit 50. STEP 11 designates a step of connecting test load means to the gas pipe connection valve 6 and the liquid pipe connection valve 7 and opening the switching valve 6d of the gas pipe connection valve 6 and the switching valve 7d of the liquid pipe connection valve 7. The refrigerant circuit component part of the test load means and the refrigerant circuit component part of the outdoor unit 50 come into mutual communication as a result of opening of the switching valves 6d and 7d, whereby a refrigerant circuit through which the refrigerant circulates is made. The "test load means" is a dummy indoor unit intended for efficiently using an narrow production space in the factory and substitutes the indoor unit 60 shown in Fig. 2 in the manufacturing step. Although unillustrated in Fig. 2, the test load means releases or absorbs heat of a refrigerant circulating between the test load means and the outdoor unit 50 as does the indoor unit 60, thereby consuming the heat. In STEP 12, the vacuum pump is connected to an unillustrated, custom-designed vacuum pump connecting port provided in the outdoor unit 50. In STEP 13, the interior of the refrigerant circuit is decompressed up to predetermined pressure at which a predetermined amount of refrigerant required to perform test working can be sealed in the refrigerant circuit made in STEP 11. After decompression, the vacuum pump is disconnected in STEP 14. In STEP 15, an airtight container enclosing the refrigerant A that is to be used and that is combustible or slightly combustible is connected to the unillustrated, custom-designed connecting port provided in the outdoor unit 50, thereby sealing the predetermined amount of refrigerant required to perform test working into the outdoor unit. After completion of sealing, the airtight container is removed in STEP 16. In STEP 17, the four way valve 2 is switched to perform test working and an inspection as to whether or not the outdoor unit can perform cooling and heating operation. After completion of test working, a refrigerant recover unit and the airtight container for recovering the refrigerant A are connected in STEP 18 to an unillustrated, custom-designed connecting port provided in the refrigerant circuit. Subsequent to connecting operation, the refrigerant A in the refrigerant circuit; namely, the combustible or slightly combustible refrigerant is recovered by means of the recovery airtight container in STEP 19. After completion of recovery operation, the refrigerant recover unit and the recovery airtight container are disconnected in STEP 20. In STEP 21, the switching valve 6d of the gas pipe connection valve 6 and the switching valve 7d of the liquid pipe connection valve 7 of the outdoor unit 50 are closed, and the test load means is disconnected from the outdoor unit 50. In STEP 22, the vacuum pump is again connected to the unillustrated, custom-designed connecting port provided in the outdoor unit 50. In STEP 23, the interior of the refrigerant circuit is decompressed to predetermined pressure. After completion of decompression operation, the vacuum pump is disconnected in STEP 24. However, the interior of the refrigerant circuit may become nearly close to a vacuum at a point in time when the refrigerant was recovered by a refrigerant recovery unit in STEP 18 to STEP 20. In that case, processing pertaining to STEP 22 to STEP 24 may not be performed. In STEP 25, the airtight container containing the refrigerant B that is an incombustible refrigerant is connected to an unillustrated, custom-designed connecting port provided in the outdoor unit 50, and the refrigerant B is sealed in the outdoor unit. After completion of sealing operation, the airtight container is disconnected in STEP 26. The unillustrated connecting port for connection with the vacuum pump and the unillustrated connecting port for sealing a refrigerant, which were used in STEP 11 to STEP 26, are not necessary in subsequent steps and may therefore be eliminated. After completion of processing pertaining to STEP 11 to STEP 26, processing proceeds to subsequent STEP 27 that is a final assembly step of attaching remaining components to the outdoor unit.

The above descriptions are about the steps of manufacturing the outdoor unit 50 of the air-conditioning unit. However, the same steps also apply to manufacture of a refrigeration unit.

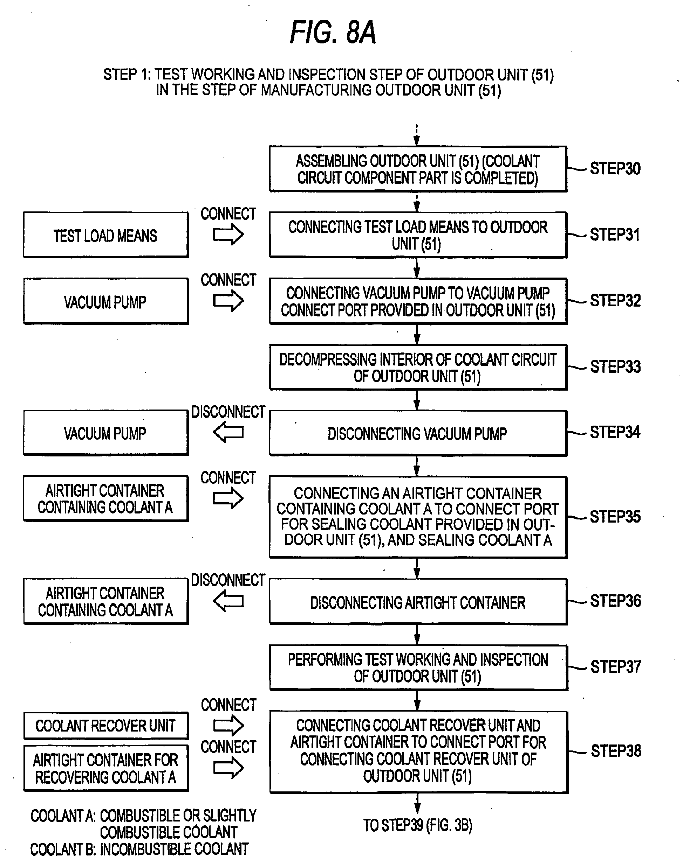

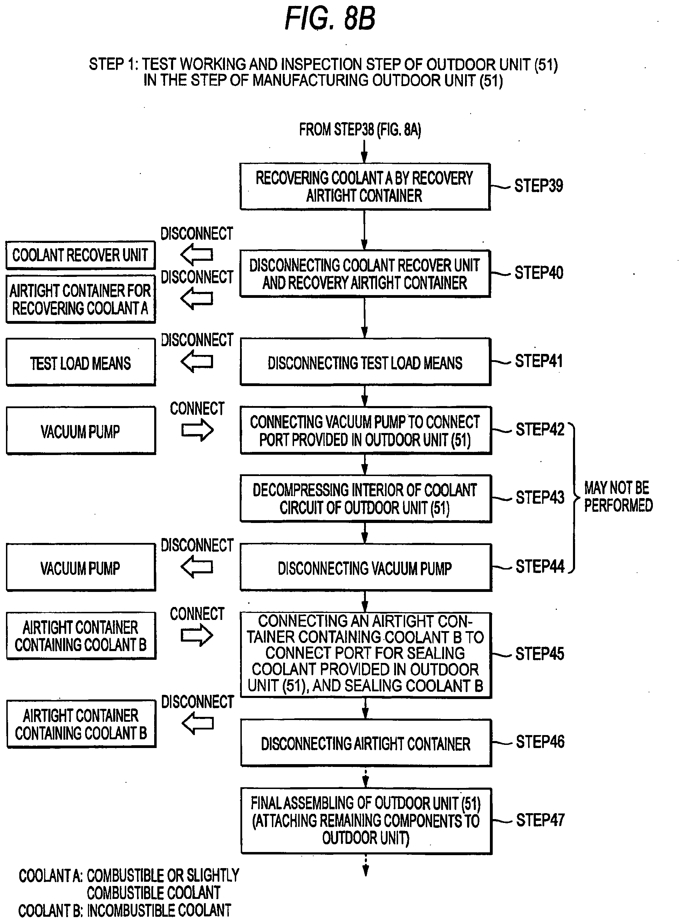

The steps for manufacturing the outdoor unit 50 have been described thus far. Steps for manufacturing the outdoor unit 51 used for providing a hot water supply will be described hereinafter. The steps shown in Fig. 6 also apply to the outdoor unit 51. However, steps preceding and subsequent to test working and inspection in STEP 1 are as illustrated in Fig. 8. The preparation step before the test, the test working/inspection step, and the post-processing step are the same as their counterparts shown in Fig. 7. STEP 30 also designates a final step of assembling an outdoor unit as in Fig. 7. In STEP 11 shown in Fig. 7, the test load means is connected to the gas pipe connection valve 6 and the liquid pipe connection valve 7 of the outdoor unit 50. However, the outdoor unit 51 is not equipped with the gas pipe connection valve 6 and the liquid pipe connection valve 7. The outdoor unit 51 is configured such that a refrigerant can circulate through a refrigerant circuit provided in the outdoor unit 51 without connection with the test load means. That is, test load means equivalent to the indoor unit 60 does not need to be connected. Instead, in STEP 31 shown in Fig. 8, another test load means is connected to the connecting ports 21 and 22 shown in Fig. 5, and by causing an antifreeze liquid, such as water, alcohol, or brine, to circulate through the load-side heat exchanger 20, heat exchange operation is performed. STEP 32 to STEP 46 are the same as their counterpart steps for the outdoor unit 50. In STEP 32, a vacuum pump is connected to the outdoor unit 51, and an interior of the refrigerant circuit of the outdoor unit 51 is decompressed to predetermined pressure in STEP 33. After completion of decompression operation, the vacuum pump is disconnected in STEP 34. In STEP 35, an airtight container containing the refrigerant A that is a combustible or slightly combustible refrigerant is connected, thereby sealing the refrigerant A into the outdoor unit. After completion of sealing operation, the airtight container is disconnected in STEP 36. In STEP 37, test working/inspection is performed as to whether or not the outdoor unit can properly work. In STEP 38, the refrigerant recover unit and the airtight container for recovering the refrigerant A are connected together, and the refrigerant A is recovered in STEP 39. After completion of recovery operation, the refrigerant recovery unit and the recovery airtight container are disconnected from each other in STEP 40. In STEP 41, the water or the antifreeze liquid is drained from the test load means and the load-side heat exchanger 20, and the test load means is disconnected from the outdoor unit 57. In STEP 42, the vacuum pump is again connected, and the interior of the refrigerant circuit is decompressed to the predetermined pressure in STEP 43. After completion of decompression operation, the vacuum pump is disconnected in STEP 44. However, when the refrigerant recovery unit is already in a sufficient vacuum state in STEP 38 to STEP 40, processing pertaining to STEP 42 to STEP 44 may not be performed. The airtight container containing the refrigerant B that is an incombustible refrigerant is connected in STEP 45, and the refrigerant B is sealed in the outdoor unit. After completion of sealing operation, the airtight container is disconnected in STEP 46. As in the case of the outdoor unit 50, the unillustrated connecting port for connection with the vacuum pump and the unillustrated connecting port for sealing a refrigerant, which were used in STEP 31 to STEP 46, are not necessary in subsequent steps and therefore, may be eliminated. After completion of processing pertaining to STEP 31 to STEP 46, processing proceeds to subsequent STEP 47 that is a final assembly step of attaching remaining components to the outdoor unit 50.

When the outdoor units 50 and 51 perform test working while the refrigerant is sealed in the units as described in connection with STEP 15 to STEP 17 in Fig. 7 and STEP 35 to STEP 37 in Fig. 8, and when the outdoor units operates as the air-conditioning unit or the refrigeration unit as described in connection with STEP 8 and subsequent STEPs in Fig. 6, low GWP refrigerants exhibiting a GWP of less than 150, such as the HC refrigerants like propane, butane, and isobutene, and the HFC refrigerants like HFO1234yf are used as the combustible refrigerant or the slightly combustible refrigerant sealed in the refrigerant circuit. If the combustible or slightly combustible refrigerant leaks near flames, the refrigerant may catch fire. Accordingly, a contrivance is made to minimize a time and a number of steps during which the combustible refrigerant or the slightly combustible refrigerant is used in the manufacturing steps, and a place where the outdoor unit is to be used is well ventilated, to thus prevent accumulation of the refrigerant.

Meanwhile, in relation to the incombustible refrigerant, a previously-sealed incombustible refrigerant is not recovered on site. Therefore, an HFC refrigerant, such as R410A and R407C, or a natural refrigerant like CO₂ that is capable of phase change, to thus be able to use latent heat, under pressure conditions of a refrigerant that circulates through a refrigerant circuit during air-conditioning operation of an air-conditioning unit or refrigerating operation of a refrigeration unit. An inert gas, such as nitrogen, helium, and argon, is also available as an incombustible material. However, the inert gas is not capable of a phase change, to thus be able to use latent heat, under pressure conditions of a refrigerant that circulates through a refrigerant circuit during air-conditioning operation of the air-conditioning unit or refrigerating operation of the refrigeration unit. Therefore, the inert gas does not act as a refrigerant in the refrigerant circuit and is not suitable as an incombustible refrigerant of the present invention and hence not used.

The amount of incombustible refrigerant sealed in the refrigerant circuit component parts of the outdoor units 50 and 51 is determined so that a pressure of the incombustible refrigerant is an atmospheric pressure or more. Accordingly, even if the refrigerant circuit is accidentally brought into mutual communication with the atmosphere in any of the shipping step, the storing step, the conveying step, and the setup step, entry of the atmosphere into the refrigerant circuit component parts of the outdoor units 50 and 51 is prevented.

In relation to the refrigerant circuit of the air-conditioning unit and the refrigeration unit, guidelines, such as an intensity of the refrigerant circuit, are described in JISB8020, or the like, so as to prevent pipes of the refrigerant circuit from being damaged by a refrigerant gas sealed in the refrigerant circuit. A pressure limitation achieved as a result of intensity of the refrigerant circuit being designed so as to prevent occurrence of fractures, in compliance with the guidelines, is referred to as design pressure. Since the refrigerant circuits of the outdoor units 50 and 51 are designed so as to use a combustible low GWP refrigerant or a slightly combustible low GWP refrigerant, the outdoor units are equipped with a refrigerant circuit having strength of design pressure that prevents occurrence of fractures when the combustible low GWP refrigerant or the slightly combustible low GWP refrigerant is sealed in the refrigerant circuit. However, a density of the combustible low GWP refrigerant or the slightly combustible low GWP refrigerant is about 100 times or more than that of an incombustible refrigerant. Therefore, design pressure for the combustible low GWP refrigerant or the slightly combustible low GWP refrigerant becomes lower than design pressure for the incombustible refrigerant. Therefore, even when the incombustible refrigerant is sealed up to the design pressure for the combustible low GWP refrigerant or the slightly combustible low GWP refrigerant, the amount of sealed refrigerant becomes small, and hence a break or deformation, which would otherwise arise when the internal pressure of the refrigerant circuit component parts of the outdoor units 50 and 51 become too high, does not occur.

Procedures from the packing step corresponding to STEP 2 in Fig.6 to the installation step corresponding to STEP 8 in Fig. 6 are now described. In the steps, the refrigerant sealed in the refrigerant circuit component part of the outdoor unit 50 and the refrigerant circuit component part of the outdoor unit 51 is an incombustible refrigerant. Therefore, even if the refrigerant leaks near flames as a result of the outdoor unit having toppled down, the refrigerant may not catch fire.

Further, the refrigerant circuit component part of the load unit, such as the indoor unit 60 and the freezer 61, does not have any sealing valve, such as the switching valve. Since the indoor unit 60 and the freezer 61 are shipped while their refrigerant circuit component parts remain in mutual communication with the atmosphere, they are originally free from a risk of fire. Further, a load unit, such as a hot water supply unit, connected to the outdoor unit 51 is not equipped with a refrigerant circuit. Accordingly, the load unit does not raise a fire problem, either.

In the conveying step corresponding to STEP 4 or 6 shown in Fig. 6, a refrigerant cylinder that is filled with a combustible or slightly combustible refrigerant and that is to be sealed into an air-conditioning unit or a refrigeration unit on site is also conveyed along with the air-conditioning unit or the refrigeration unit. However, the air-conditioning unit or the refrigeration unit and the refrigerant cylinder filled with a combustible or slightly combustible refrigerant do not always need to be conveyed in the same transport means. The air-conditioning unit or the refrigeration unit can first be carried to a place where the air-conditioning unit or the refrigeration unit is to be set, and the refrigerant cylinder can later be carried. Alternatively, the refrigerant cylinder may be carried at the same time as the air-conditioning unit or the refrigeration unit by different transport means. By conveying the air-conditioning unit or the refrigeration unit and the refrigerant cylinder in different transport means, even if a refrigerant leaks near flames as a result of the indoor unit 60 or the outdoor unit 50, which configure an air-conditioning unit or a refrigeration unit, having toppled down, there is no danger of catching fire. Moreover, the air-conditioning unit or the refrigeration unit and the refrigerant cylinder are conveyed by different transport means, whereby installation work can be enhanced by first conveying the air-conditioning unit or the refrigeration unit and subsequently conveying the refrigerant cylinder after completion of installation of the air-conditioning unit or the refrigeration unit.

Meanwhile, conveying the air-conditioning unit or the refrigeration unit and the refrigerant cylinder in the same transport means does not raise any problem. All you need to do at that time is to take sufficient safety measures against toppling of the refrigerant cylinder. By doing so, even if the air-conditioning unit or the refrigeration unit conveyed concurrently with the refrigerant cylinder has toppled down, the combustible or slightly combustible refrigerant filled in the refrigerant cylinder will not leak.

In storing step corresponding to STEP 5 shown in Fig. 6, the air-conditioning unit or the refrigeration unit and the refrigerant cylinder filled with the combustible or slightly combustible refrigerant can be stored in different warehouses as in the conveying step. Even if a refrigerant leaks near flames as a result of the indoor unit 60 and the outdoor unit 50, which configure the air-conditioning unit or the refrigeration unit, having toppled down, the refrigerant cannot catch fire, because the air-conditioning unit or the refrigeration unit and the refrigerant cylinder are separately stored. Even when the air-conditioning unit or the refrigeration unit and the refrigerant cylinder filled with a combustible or a slightly combustible refrigerant are simultaneously stored, all you have to do is to take sufficient safety measures against toppling down of the refrigerant cylinder. Further, in the storing step corresponding to STEP 5, the air-conditioning unit or the refrigeration unit is merely stored. Thus, no problem arises even when a combustible or slightly combustible refrigerant sealed during installation and setup operation is conveyed, at the time of installation or setup operation, directly from a refrigerant manufacturer to a site where the user is to use the air-conditioning unit or the refrigeration unit. In that case, there is no necessity for providing a warehouse that stores the air-conditioning unit or the refrigeration unit with safety means, such as means for preventing topping down of the refrigerant cylinder.

In order to notify people around the outdoor unit that the outdoor unit using a combustible or slightly combustible refrigerant in the conveying step corresponding to STEP 4 or STEP 6 shown in Fig. 6 is not equipped with a combustible or slightly combustible refrigerant in the shipping step, the storing step, and the conveying step, a written notice or mark is printed or a sticker is affixed on a surface of a packing material used in the packing step corresponding to STEP 2. People around the outdoor unit can ascertain that, even if a refrigerant leaks near flames as a result of the outdoor unit having toppled down, the refrigerant will not catch fire, so that a scare can be removed from the people around the toppled outdoor unit. The mark or sticker providing a notice to the people around the outdoor unit may be provided at any place, as long as the mark or sticker is visible during storage and conveyance. The mark or sticker can also be affixed on an exterior wall of the outdoor unit.

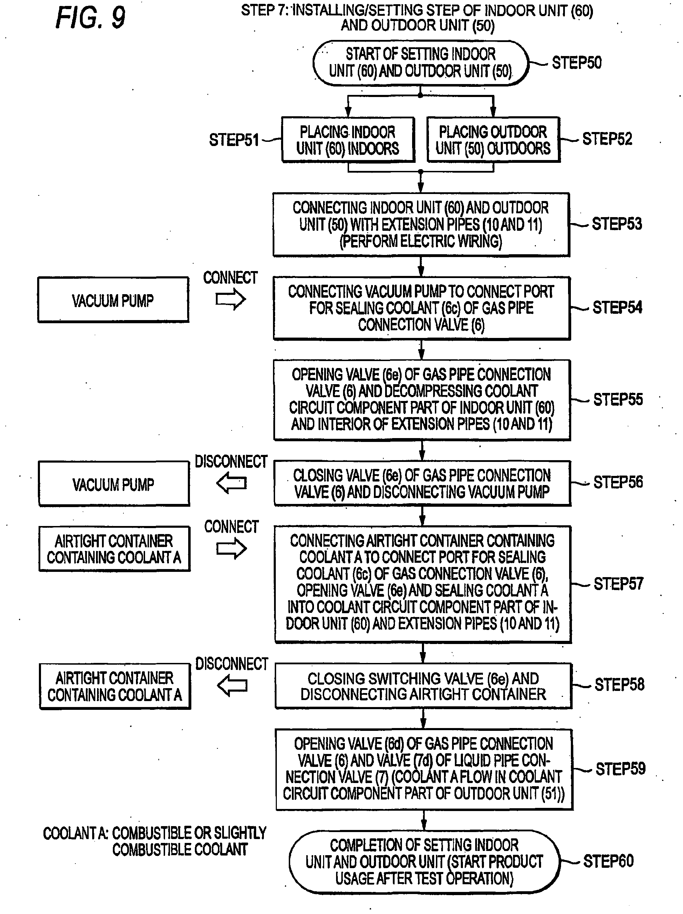

Next, the installation/setup step shown in Fig. 6 will be described. Fig. 9 shows a step of installing the outdoor unit 50 and the indoor unit 60 at a predetermined place where the user is to use both the outdoor unit 50 and the indoor unit 60. STEP 50 shows start of installation and setup operation. In STEP 51 and STEP 52, the outdoor unit 50 and the indoor unit 60 are placed at a predetermined place where the user is to use them. In STEP 53, after completion of installation, the liquid extension pipe 11 is connected to the liquid pipe connection valve 7 of the outdoor unit 50 and the liquid pipe connecting port 13 of the indoor unit 60, and the gas extension pipe 10 is connected to the gas pipe connection valve 6 of the outdoor unit 50 and the gas pipe connecting port 12 of the indoor unit 60. Although the refrigerant circuit component part of the indoor unit 60 and the liquid extension pipe 11 and the gas extension pike 10 are in mutual communication, the switching valves 6d, 6e, and 7d of the gas pipe connection valve 6 and the liquid pipe connection valve 7, which are in a factory shipped state, are in a fully-closed state, and thus, the refrigerant circuit component part of the indoor unit 60 and the refrigerant circuit component part of the outdoor unit 50 are not yet in mutual communication with each other. Meanwhile, electric wiring for establishing communication between the indoor unit 60 and the outdoor unit 50 and electric wiring for supplying electric power to activate a compressor are assumed to have already been completed before STEP 53. In STEP 54, the vacuum pump is connected to the connecting port 6c of the gas pipe connection valve 6. In STEP 55, the switching valve 6e of the gas pipe connection valve 6 is opened, thereby decompressing the refrigerant circuit component part of the indoor unit 60 and the interior of the extension pipes 10 and 11 until a pressure comes to 100 Pa or less. After completion of decompression, the switching valve 6e of the gas pipe connection valve 6 is closed in STEP 56, and the vacuum pump is disconnected. In STEP 57, the refrigerant cylinder filled with the refrigerant A, which is a combustible or slightly combustible refrigerant, is connected to the connecting port 6c of the gas pipe connection valve 6. The switching valve 6e of the gas pipe connection valve 6 is opened, thereby sealing the refrigerant A into the refrigerant circuit component part of the indoor unit 60 and the extension pipes 10 and 11. After completion of sealing operation, the switching valve 6e is closed in STEP 58, thereby disconnecting the refrigerant cylinder. In STEP 59, the switching valve 6d of the gas pipe connection valve 6 and the switching valve 7d of the liquid pipe connection valve 7 are opened. The refrigerant circuit component part of the indoor unit 60 and the refrigerant circuit component part of the outdoor unit 50 are brought into mutual communication by opening the switching valves 6d and 7d, whereby the sealed refrigerant A goes to the refrigerant circuit component part of the outdoor unit, too. STEP 60 designates completion of installation or setup operation. When the required amount of refrigerant cannot be sealed in the refrigerant circuit in STEP 57, there may be a case where the switching valve 6d of the gas pipe connection valve 6 and the switching valve 7d of the liquid pipe connection valve 7 are opened, thereby bringing the refrigerant circuit component part of the indoor unit 60 and the refrigerant circuit component part of the outdoor unit 50 into mutual communication with each other; where the compressor 1 is subjected to operation (e.g., cooling operation, or the like), to thus seal a required amount of combustible or slightly combustible refrigerant in the refrigerant circuit; and where the switching valve 6e of the gas pipe connection valve 6 is finally closed, to thus disconnect the cylinder.

Through the operations mentioned above, the combustible or slightly combustible refrigerant can additionally be sealed without recovering the incombustible refrigerant from the refrigerant circuit component part of the outdoor unit 50. Additionally, the refrigeration unit including the freezer 61 and the outdoor unit 50 can be installed and set through substantially the same steps.

In STEPS 57 to 59, after connection of the airtight container of the refrigerant A, the switching valves 6d and 7d can be opened before opening of the switching valve 6e, thereby bringing the refrigerant circuit component part of the indoor unit 60 and the refrigerant circuit component part of the outdoor unit 50 into mutual communication and subsequently, the switching valve 6e can be opened to seal the refrigerant A into the refrigerant circuit component part.

Explanations have been provided by reference to the example in which the switching valve 6e for opening and closing the refrigerant sealing connecting port 6c and the connecting port 6c are provided in the gas pipe connection valve 6. However, the connecting port 6c and the switching valve 6e may be provided to the refrigerant pipes of the indoor unit 60 or the extension pipes 10 and 11. In this case, the setup and installation step remains unchanged, and the vacuum pump is connected to the connecting port 6c in STEP 54 to STEP 58, and the switching valve 6e is opened, thereby producing a vacuum in the refrigerant circuit component part of the indoor unit 60. After the vacuum has been produced, the switching valve 6e is temporarily closed. The vacuum pump is disconnected, and the refrigerant cylinder is connected to the connecting port 6c, whereby a refrigerant is sealed in the refrigerant circuit component part. After completion of sealing operation, the switching valve 6e is closed, and the refrigerant cylinder is disconnected. Steps subsequent to STEP 59 are the same as those described previously.

Further, the refrigerant sealing connecting port 6c and the switching valve 6e can be provided at any position between the pipe connecting port 6a of the gas pipe connection valve 6 and the four way valve 2 shown in Fig. 1. In that case, another switching valve capable of performing opening and closing operations must be attached to any position between the four way valve 2 and the place where the refrigerant sealing connecting port 6c is attached. In the installation and setup step, after the vacuum pump has been connected to the connecting port 6c in STEP 54, the switching valve 6d is opened while the switching valve 7d and the switching valve provided between the connecting port 6c and the four way valve 2 remain closed. The vacuum pump is thereby connected to a circuit made up of the indoor unit 60 and the extension pipes 10 and 11. Specifics of operation performed in connection with STEP 54 to STEP 58 remain unchanged. In STEP 59, the switching valve 7d and the switching valve provided between the connecting port 6c and the four way valve 2 are opened, thereby bringing the refrigerant circuit component part of the indoor unit 60 in communication with the refrigerant circuit component part of the outdoor unit 50.

Similarly, the refrigerant sealing connecting port 6c and the switching valve 6e can be provided at any position between the pipe connecting port 7a of the liquid pipe connection valve 7 and the decompressor 4 shown in Fig. 1. In that case, another switching valve capable of performing opening and closing operations must be attached to any place between the decompressor 4 and the place where the refrigerant sealing connecting port 6c is attached. Even in relation to the installation and setup step, after the vacuum pump has been connected to the connecting port 6c in STEP 54, the switching valve 7d is opened while the switching valve 6d and the switching valve provided between the connecting port 6c and the decompressor 4 remain closed. The vacuum pump is thereby connected to a circuit made up of the indoor unit 60 and the extension pipes 10 and 11. Specifics of operation performed in connection with STEP 54 to STEP 58 remain unchanged. In STEP 59, the switching valve 6d and the switching valve provided between the connecting port 6c and the decompressor 4 are opened, thereby bringing the refrigerant circuit component part of the indoor unit 60 in communication with the refrigerant circuit component part of the outdoor unit 50.

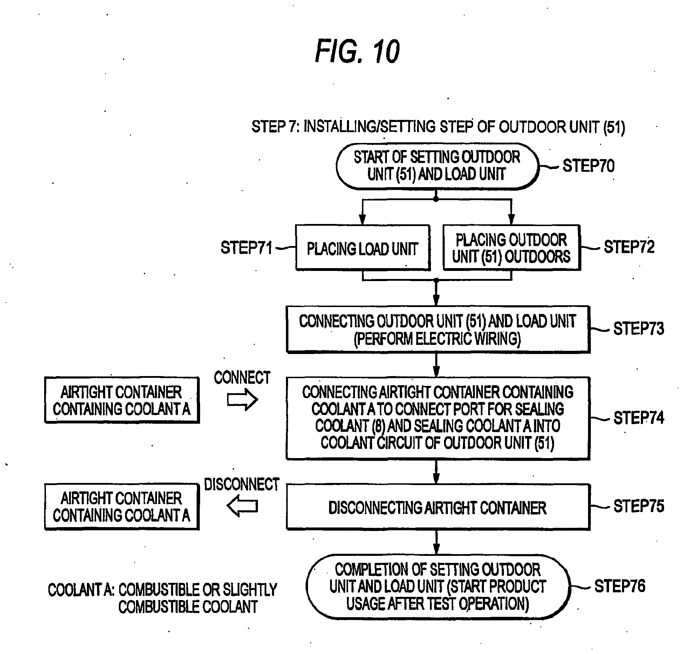

Next, the step of installing and setting the outdoor unit 51 will be described. Fig. 10 shows a step of setting the outdoor unit 51 and a load unit at a predetermined place where the user is to use the outdoor unit and the load unit. STEP 70 shows start of installation and setup operation. In STEP 71 and STEP 72, the outdoor unit 51 and the load unit are set at a predetermined place where the user is to use the outdoor unit and the load unit. Examples of the load unit are a hot water storage unit, a freezer, a refrigerator, and the like, connected to the outdoor unit 51 by way of the connecting ports 21 and 22, or the load unit may be an air-conditioning facility where the pipes thereof are embedded in a wall or floor of a room when in use. Therefore, there may be a case where a setup has already been completed before installation of the outdoor unit 51. In STEP 73, the outdoor unit 51 and the load unit are connected together, thereby enabling circulation of water or an antifreeze liquid. Electric wiring between the outdoor unit 51 and the load unit and electric wiring for supplying electric power are assumed to have already been completed before STEP 73. In STEP 74, a refrigerant cylinder filled with the combustible or slightly combustible refrigerant A is connected to a connecting port of the refrigerant sealing valve 8. The refrigerant A is sealed in the refrigerant circuit of the outdoor unit 51 by opening a switching valve of the refrigerant sealing valve 8. Since an external apparatus is not connected to the outdoor unit 51, generation of a vacuum is not performed. Additionally, since an external apparatus is not connected to the refrigerant circuit of the outdoor unit 51, there is no switching valve that is opened or closed during installation and setup operation, except the switching valve of the refrigerant sealing valve 8. After completion of sealing operation, the refrigerant cylinder is disconnected from the switching valve of the refrigerant sealing valve 8 in STEP 75. Installation and setup operations are completed in STEP 76. When the required amount of refrigerant cannot be sealed in the refrigerant circuit in STEP 74, there may be a case where only the required amount of combustible or slightly-combustible refrigerant is sealed by operating the compressor 1 and where the refrigerant cylinder is finally removed by closing the switching valve of the refrigerant sealing valve 8.

Through the operations mentioned above, the combustible or slightly combustible refrigerant can additionally be sealed without recovering the incombustible refrigerant from the refrigerant circuit component part of the outdoor unit 50. Additionally, the refrigeration unit including the freezer and the outdoor unit 51 can be installed and set through substantially the same steps.

When circulating through the refrigerant circuit at internal pressure of the refrigerant circuit achieved during the course of air-conditioning operation or refrigerating operation, for instance, 0.3 to 4.1 MPa, the combustible or slightly combustible low GWP refrigerant undergoes a phase change from liquid to gas in the heat exchanger, or the like, that is an evaporator, or a phase change from gas to liquid in the heat exchanger, or the like, that is a condenser. The heat exchanger thereby performs heat exchange operation, thereby air-conditioning a room space or freezing food products. Since the incombustible refrigerant is selected from HFC refrigerants, such as R410A and R407C, or natural refrigerants, such as CO₂, the refrigerant causes a phase change from liquid to gas in the heat exchanger, or the like, that is an evaporator, or a phase change from gas to liquid in the heat exchanger, or the like, that is a condenser, when circulating through the refrigerant circuit under internal pressure conditions for the refrigerant circuit achieved during air-conditioning operation or refrigerating operation. Therefore, when the combustible or slightly combustible low GWP refrigerant performs heat exchange by circulating through the refrigerant circuit, the incombustible refrigerant does not hinder heat exchange action of the combustible or slightly combustible low GWP refrigerant. Moreover, since the incombustible refrigerant itself performs heat exchange by circulation, heat exchange capability is not hindered.

Further, because the amount of incombustible refrigerant sealed is determined so that a pressure of the incombustible refrigerant is equal to or higher than the atmospheric pressure and equal to or lower than the design pressure of the refrigerant circuit of the outdoor unit using a combustible or slightly combustible low GWP refrigerant, the incombustible refrigerant is sealed in small amount that is about one-hundredth of an amount of combustible or slightly combustible low GWP refrigerant, which will be additionally sealed later, or less. Since the amount of incombustible refrigerant that performs heat exchange by circulating through the refrigerant circuit is relatively small, heat exchange capability of the combustible or slightly combustible low GWP refrigerant is sufficiently exhibited.

Since both of the outdoor units 50 and 51 are large scale refrigerant circuits, an amount of refrigerant more than necessary is sealed in the refrigerant circuits during air-conditioning or refrigerating operation, in order to sufficiently exhibit refrigerating capability by accommodating to a difference in setup conditions arising on site. Excessive refrigerant is temporarily recovered and stored in the liquid reservoir 5. Therefore, even when the amount of incombustible refrigerant sealed is an amount of refrigerant fulfilling the design pressure of the refrigerant circuit of the outdoor unit using a combustible or slightly combustible low GWP refrigerant, the amount of incombustible refrigerant sealed is still extremely smaller than the amount of combustible or slightly combustible low GWP refrigerant sealed on site. Further, in the air-conditioning unit or the refrigeration unit of the present invention, the incombustible refrigerant is sealed only in the refrigerant circuit component part of the outdoor unit 50. Thus, from the viewpoint of an entire refrigerant circuit made by connecting the vacuum refrigerant circuit component part of the indoor unit 60 or the freezer 61 with the vacuum liquid extension pipe 11 and the gas extension pipe 10, the relative amount of incombustible refrigerant becomes even smaller. Therefore, even when the incombustible refrigerant circulates through the refrigerant circuit, the incombustible refrigerant does not hinder the heat exchange capability exhibited by the combustible or slightly combustible refrigerant.

For these reasons, even when the incombustible refrigerant previously sealed in the refrigerant circuit component part of the outdoor unit is not recovered, the air-conditioning unit or the refrigeration unit does not induce large deterioration of performance. Rather, predetermined capability achieved when the combustible or slightly combustible low GWP refrigerant is sealed can be exhibited.

Even when a high GWP incombustible refrigerant having a GWP of the order of 2000 to 1500 is used for the outdoor units 50 and 51 as compared with a low GWP combustible or slightly combustible refrigerant having a GWP of less than 150 sealed on site, the amount of the incombustible refrigerant sealed before factory shipment is extremely small. Therefore, in view of the entire refrigerant including the refrigerant additionally sealed during installation and setup operation, GWP is less than 150. Thus, an air-conditioning unit or a refrigeration unit in which a low GWP refrigerant having a GWP of less than 150 is sealed can be provided.

Further, when a refrigerant sealed and used during air-conditioning or refrigerating operation is a combustible HC refrigerant, a small amount of HC refrigerant may be previously mixed in the incombustible refrigerant sealed in an outdoor unit shipped from the factory. The HC refrigerant exhibits high compatibility with a mineral oil that is a lubricant for the compressor, whilst the incombustible HFC refrigerant previously sealed in the outdoor unit exhibits low compatibility with the mineral oil. In the installation and setup step corresponding to STEP 7 shown in Fig. 6, even if the compressor is started while sealing of an HC refrigerant to be sealed for air-conditioning or refrigerating operation is forgotten during work for setting an outdoor unit including an incombustible HFC refrigerant previously sealed, the mineral oil circulates through the refrigerant circuit along with the HC refrigerant and returns to the compressor as long as the HC refrigerant exhibiting high compatibility with the mineral oil is sealed in amounts of about 10 to 20 percents of the amount of mineral oil along with the incombustible refrigerant. Consequently, depletion of oil in the compressor can be avoided, thereby preventing occurrence of a failure in compressor. The HC refrigerant employed at this time can be an HC refrigerant sealed during air-conditioning or refrigerating operation or another HC refrigerant, such as R422D and R600a, which does not hinder circulation of an HC refrigerant additionally sealed on site. Moreover, the amount of HC refrigerant sealed concurrently with the incombustible refrigerant in order to ensure compatibility differs according to a length of the refrigerant circuit or an amount of refrigerant or mineral oil sealed. For these reasons, the amount of HC refrigerant sealed is not necessarily about 10 to 20 percents of the amount of mineral oil. Any amount of HC refrigerant is acceptable, so long as the HC refrigerant circulates through the refrigerant circuit and returns to the compressor.

Meanwhile, R422D and R600a are combustible refrigerants. In order to let R422D or R600a sealed concurrently with the incombustible refrigerant circulate and return to the compressor, a sufficient amount of combustible refrigerant is as small as about 10 to 20 percents of the amount of mineral oil. Therefore, even if a refrigerant leaks as a result of the outdoor unit having fallen or toppled down in the storage or conveying step, a possibility of occurrence of firing due to leakage of the refrigerant is low. Further, even when there is used an HC refrigerant sealed during air-conditioning or refrigerating operation in place of R422D or R600a, the amount of HC refrigerant is about 10 to 20 percents of the amount of mineral oil as in the case with R422D or R600a. Therefore, even if a refrigerant leaks as a result of the outdoor unit having fallen or toppled down in the storage or conveying step, a possibility of occurrence of firing due to leakage of the refrigerant is low.

Further, in the case of an outdoor unit in which an HFC refrigerant, such as HFO123yf, is sealed during air-conditioning or refrigerating operation, there is used a refrigerant oil that exhibits high compatibility with the HFC refrigerant and that is a lubricant for the compressor, regardless of whether the refrigerant oil is combustible or incombustible. Therefore, there is no need to mix an HC refrigerant in the incombustible refrigerant before sealing.

As described above, when the outdoor unit that is shipped from the factory after an incombustible refrigerant has been sealed in a refrigerant circuit thereof is set at a place where the user is to use the outdoor unit, the outdoor unit can be used by additionally sealing a required amount of combustible refrigerant or slightly combustible refrigerant into a refrigerant circuit without recovery of the incombustible refrigerant sealed before shipment from the refrigerant circuit, that is, while the incombustible refrigerant is sealed in the refrigerant circuit. Therefore, there can be provided an air-conditioning unit or a refrigeration unit using a combustible refrigerant or a slightly combustible refrigerant, wherein safety in steps of shipping, storing, and conveying the air-conditioning unit or the refrigeration unit can be assured and work load imposed during setup operation on site can be lessened.

Further, according to the present embodiment of this invention, even when the air-conditioning unit or the refrigeration unit has toppled down or fallen in the storage or conveying step, the possibility of the refrigerant catching fire is low. Further, the incombustible refrigerant does not need to be recovered during setup operation. Therefore, the possibility of the incombustible refrigerant being released into the atmosphere is low.

Further, according to the present embodiment of this invention, an HC refrigerant, such as propane, butane, and isobutene, and an HFC refrigerant, such as HFO1234yf, which have a low GWP refrigerant exhibiting a GWP of less than 150, are used as a combustible or slightly combustible refrigerant sealed in an air-conditioning unit or a refrigeration unit at the timing of inspection in manufacturing steps and after setup on site, so to be useable. Thus, ozone layer will not be destroyed and the refrigerant exhibits a small GWP, and therefore, is friendly to the global environment.

Further, according to the present embodiment of this invention, an HFC refrigerant, such as R410A and R407C, or a natural refrigerant, such as CO₂, is used as an incombustible refrigerant to be sealed before shipment from the factory. Since the incombustible refrigerant changes its phase from liquid to gas or gas to liquid under pressure conditions for the refrigerant required during air-conditioning or refrigerating operation, heat exchange of the additionally sealed HC refrigerant or HFC refrigerant is not hindered. Further, even if a refrigerant leaks as a result of the outdoor unit having fallen or toppled down in the storage or conveying step, the possibility of occurrence of firing due to leakage of the refrigerant is low.

Further, the refrigerant circuit of the present embodiment of this invention is a large scale refrigerant circuit having a liquid reservoir for storing excessive refrigerant. When the air-conditioning unit or the refrigeration unit is installed and set on site, in order to accommodate a difference in setup conditions on site and sufficiently exhibit refrigerating capability, an additionally sealed combustible or slightly combustible refrigerant is sealed in an amount more than necessary. Thus the amount of incombustible refrigerant sealed before shipment from the factory is smaller than the amount of additionally sealed combustible or slightly combustible refrigerant. Meanwhile, even if the incombustible refrigerant circulates through the refrigerant circuit, heat exchange capability exhibited by the combustible or slightly combustible refrigerant is not hindered, and hence, incombustible refrigerant does not need to be recovered.

Further, according to the present embodiment of this invention, the amount of incombustible refrigerant sealed before shipment from the factory is smaller than the amount of combustible or slightly combustible low GWP refrigerant additionally sealed during installation and setup operation. Therefore, even when a small amount of incombustible refrigerant exhibiting a high GWP is mixed with the combustible or slightly combustible low GWP refrigerant, the GWP exhibited by the entire refrigerant can be maintained less than 150. Accordingly, there can be provided an air-conditioning unit or a refrigeration unit in which a low GWP refrigerant fulfilling a target GWP of less than 150 is sealed.

Further, according to the present embodiment of this invention, a small amount of HC refrigerant is previously mixed in an incombustible refrigerant. Therefore, even if the compressor is started while sealing of the HC refrigerant is forgotten during work for setting an outdoor unit having a refrigerant circuit component part in which an HFC refrigerant has previously been sealed, an HC refrigerant exhibiting high compatibility with a mineral oil circulates through the refrigerant circuit along with the mineral oil and returns to the compressor. Thus, depletion of oil in the compressor can be avoided, and a failure does not take place in the compressor. The HC refrigerant employed at this time can be an HC refrigerant sealed during air-conditioning or refrigerating operation or another HC refrigerant, such as R422D and R600a, which does not hinder circulation of the HC refrigerant additionally sealed on site. Further, although R422D or R600a is a combustible refrigerant, the amount of R422D or R600a included in the incombustible refrigerant is small. Hence, even if a refrigerant leaks as a result of the outdoor unit having fallen or toppled down in the storage or conveying step, a possibility of occurrence of firing due to leakage of the refrigerant is low.

Further, according to the present embodiment of this invention, means for notifying people around an outdoor unit that an incombustible refrigerant is sealed in the outdoor unit during storage, shipment, and conveying operations and that a combustible or slightly combustible refrigerant is sealed in the outdoor unit when the outdoor unit is set, is provided on a surface of a packing material of the outdoor unit in steps of manufacturing outdoor units for refrigeration units or air-conditioning units. Thus, it is possible to notify people around the outdoor unit that there is little possibility of occurrence of firing even if the outdoor unit toppled down in storage, shipment, and conveying steps.

Moreover, according to the present embodiment of this invention, the combustible or slightly combustible refrigerant sealed in the outdoor unit is stored, shipped, and conveyed in a space separated from the outdoor unit in steps of shipping, storing, and conveying the outdoor unit of the air-conditioning unit or the refrigeration unit. Therefore, even if a combustible refrigerant leaks as a result of the outdoor unit having fallen or topped down in the storage, shipment, or conveying step, there is little possibility of occurrence of firing due to leakage of the refrigerant.

## Claims

1. A method for setting an apparatus using refrigerant, the method comprising:
sealing an incombustible refrigerant in a refrigerant circuit component part of an outdoor unit (50), shipping the outdoor unit (50) from a factory, and setting the outdoor unit (50);
connecting the refrigerant circuit component part of the set outdoor unit (50) to a load-side apparatus (9) of an indoor unit (60) by connecting the liquid extension pipe (11) to a liquid pipe connection valve (7) of the outdoor unit (50) and a liquid pipe connecting port (13) of the indoor unit (60), wherein the liquid pipe connection valve (7) comprises a switching valve (7d) in a fully closed state, and by connecting the gas extension pipe (10) to a gas pipe connection valve (6) of the outdoor unit (50) and a gas pipe connecting port (12) of the indoor unit (60), wherein the gas pipe connection valve (6) comprises a first switching valve (6d) and a second switching valve (6e) in a fully closed state, thereby forming a refrigerant circuit, ;
connecting a vacuum pump to the load-side apparatus (9) to which the extension pipes (10, 11) are connected by connecting the vacuum pump to a connecting port (6c) of the gas pipe connection valve (6),
opening the second switching valve (6e) of the gas pipe connection valve (6),
evacuating the load-side apparatus (9) and the extension pipes (10, 11);
closing the second switching valve (6e) of the gas pipe connection valve (6) and disconnecting the vacuum pump,
connecting a container containing combustible refrigerant or slightly combustible refrigerant to the load-side apparatus (9) by connecting the container to the connecting port (6c) of the gas pipe connection valve (6), and
sealing the combustible refrigerant or the slightly combustible refrigerant in the load-side apparatus and the extension pipes (10, 11) by opening the second switching valve (6e) of the gas pipe connection valve (6),; and
after sealing of the combustible refrigerant or the slightly combustible refrigerant in the load-side apparatus and the extension pipes, closing the second switching valve (6e) of the gas pipe connection valve (6), and
bringing the load-side apparatus (9), the extension pipes (10, 11), and the refrigerant circuit component part of the outdoor unit (50) in mutual communication by opening the first switching valve (6d) of the gas pipe connection valve (6) and the switching valve (7d) of the liquid pipe connection valve (7), so that the refrigerant can circulate through the load-side apparatus (9), the extension pipes (10, 11), and the refrigerant circuit component part.

2. The method according to claim 1, wherein the amount of incombustible refrigerant which is sealed in the refrigerant circuit component parts of the outdoor unit (50) is determined so that a pressure of the incombustible refrigerant is an atmospheric pressure or more.

3. The method according to claim 1 or 2, wherein the combustible refrigerant or the slightly combustible refrigerant is an HC refrigerant such as propane, butane and isobutene, or an HFC refrigerant such as HFO 1 234yf.

4. The method according to any one of claims 1 to 3, wherein the incombustible refrigerant is an HFC refrigerant such as R410A and R407C, or a natural refrigerant such as CO₂.

5. The method according to any one of claims 1 to 4, further comprising an indicating portion, on a surface of a packing material used for packing the outdoor unit (50) or an exterior wall of the outdoor unit (50), that the outdoor unit (50) is shipped from a factory while the incombustible refrigerant is sealed in the outdoor unit (50) and that, the combustible refrigerant or the slightly combustible refrigerant is sealed in the outdoor unit (50) when the outdoor unit is set at a place of use and used.

6. The method according to any one of claims 1 to 5, wherein, when the outdoor unit (50) is conveyed, the outdoor unit (50) and a container containing the combustible refrigerant or the slightly combustible refrigerant to be sealed in the outdoor unit are conveyed by different conveying units.

7. The method according to claim 1, wherein the load-side apparatus (9) is an indoor unit for air-conditioning an indoor space, or a freezer or a refrigerator for freezing food.

8. An apparatus using refrigerant, comprising:
a refrigerant circuit including:
an outdoor unit (50) which comprises a refrigerant circuit component part of an outdoor unit (50) including a compressor (1), an outdoor heat exchanger (3), a decompressor (4), and a liquid reservoir (5), in which an incombustible refrigerant is sealed, wherein the refrigerant circuit component part of an outdoor unit (50) further includes a four way valve (2), a gas pipe connection valve (6) and a liquid pipe connection valve (7), and
an indoor unit (60) which comprises a load-side apparatus (9) which is connected to the refrigerant circuit component part of the outdoor unit (50) by way of a gas extension pipe (10) and a liquid extension pipe (11); and
comprised by the gas pipe connection valve (6), a first pipe connecting port (6a) connected to an interior pipe of the outdoor unit (50), a second pipe connecting port (6b) for connection with the extension pipe (10), a refrigerant sealing connecting port (6c) for sealing of a refrigerant, and a first and a second switching valve (6d, 6e) suitable for being opened and closed,
wherein, when the first switching valve (6d) is opened, the first pipe connecting port (6a) and the second pipe connecting port (6b) communicate with each other, and
wherein, when the second switching valve (6e) is opened, the second pipe connecting port (6b) and the refrigerant sealing connecting port (6c) communicate with each other.

## Patentansprüche

1. Verfahren zum Einrichten einer Kältemittel-nutzenden-Vorrichtung, wobei das Verfahren umfasst:
Versiegeln eines nicht brennbaren Kältemittels in einem Kältemittelkreislaufkomponententeil einer Außeneinheit (50), Ausliefern der Außeneinheit (50) aus einem Werk, und Einrichten der Außeneinheit (50);
Verbinden des Kältemittelkreislaufkomponententeils der eingerichteten Außeneinheit (50) mit einer lastseitigen Vorrichtung (9) einer Inneneinheit (60) durch Verbinden der Flüssigkeitsverlängerungsleitung (11) mit einem Flüssigkeitsleitungsverbindungsventil (7) der Außeneinheit (50) und einem Flüssigkeitsleitungsverbindungsanschluss (13) der Inneneinheit (60), wobei das Flüssigkeitsleitungsverbindungsventil (7) ein Schaltventil (7d) in einem vollständig geschlossenen Zustand umfasst, und durch Verbinden der Gasverlängerungsleitung (10) mit einem Gasleitungsverbindungsventil (6) der Außeneinheit (50) und einem Gasleitungsverbindungsanschluss (12) der Inneneinheit (60), wobei das Gasleitungsverbindungsventil (6) ein erstes Schaltventil (6d) und ein zweites Schaltventil (6e) in einem vollständig geschlossenen Zustand umfasst und dadurch ein Kältemittelkreislauf gebildet wird;
Verbinden einer Vakuumpumpe mit der lastseitigen Vorrichtung (9), mit der die Verlängerungsleitungen (10, 11) verbunden sind, durch Verbinden der Vakuumpumpe mit einem Verbindungsanschluss (6c) des Gasleitungsverbindungsventils (6),
Öffnen des zweiten Schaltventils (6e) des Gasleitungsverbindungsventils (6),
Evakuieren der lastseitigen Vorrichtung (9) und der Verlängerungsleitungen (10, 11);
Schließen des zweiten Schaltventils (6e) des Gasleitungsverbindungsventils (6) und Trennen der Vakuumpumpe,
Verbinden eines Behälters, der brennbares Kältemittel oder schwach brennbares Kältemittel enthält, mit der lastseitigen Vorrichtung (9), durch Verbinden des Behälters mit dem Verbindungsanschluss (6c) des Gasleitungsverbindungsventils (6), und
Versiegeln des brennbaren Kältemittels oder des schwach brennbaren Kältemittels in der lastseitigen Vorrichtung und den Verlängerungsleitungen (10,11) durch Öffnen des zweiten Schaltventils (6e) des Gasleitungsverbindungsventils (6), und
nach dem Versiegeln des brennbaren Kältemittels oder des schwach brennbaren Kältemittels in der lastseitigen Vorrichtung und den Verlängerungsleitungen, Schließen des zweiten Schaltventils (6e) des Gasleitungsverbindungsventils (6), und
Bringen der lastseitigen Vorrichtung (9), der Verlängerungsleitungen (10, 11) und des Kältemittelkreislaufkomponententeils der Außeneinheit (50) in wechselseitige Kommunikation durch Öffnen des ersten Schaltventils (6d) des Gasleitungsverbindungsventils (6) und des Schaltventils (7d) des Flüssigkeitsleitungsverbindungsventils (7), sodass das Kältemittel durch die lastseitige Vorrichtung (9), die Verlängerungsleitungen (10, 11) und das Kältemittelkreislaufkomponententeil zirkulieren kann.

2. Verfahren nach Anspruch 1, wobei die Menge des nicht brennbaren Kältemittels, das in dem Kältemittelkreislaufkomponententeilen der Außeneinheit (50) versiegelt ist, so bestimmt wird, dass ein Druck des nicht brennbaren Kältemittels ein atmosphärischer Druck oder mehr ist.

3. Verfahren nach Anspruch 1 oder 2, wobei das brennbare Kältemittel oder das schwach brennbare Kältemittel ein HC-Kältemittel, wie Propan, Butan und Isobuten ist, oder ein HFC-Kältemittel, wie HFO 1234yf ist.

4. Verfahren nach einem der Ansprüche 1 bis 3, wobei das nicht brennbare Kältemittel ein HC-Kältemittel, wie R410A und R407C ist, oder ein natürliches Kältemittel, wie CO₂, ist.

5. Verfahren nach einem der Ansprüche 1 bis 4, ferner umfassend ein Indikatorteil auf einer Oberfläche eines Verpackungsmaterials, das zum Verpacken der Außeneinheit (50) verwendet wird, oder einer äußeren Wand der Außeneinheit (50), dass die Außeneinheit (50) von einem Werk ausgeliefert wird während das brennbare Kältemittel in der Außeneinheit (50) versiegelt ist, und dass das brennbare Kältemittel oder das schwach brennbare Kältemittel in der Außeneinheit (50) versiegelt ist, wenn die Außeneinheit an einem Nutzungsort eingerichtet und genutzt wird.

6. Verfahren nach einem der Ansprüche 1 bis 5, wobei, wenn die Außeneinheit (50) befördert wird, die Außeneinheit (50) und ein Behälter enthaltend das brennbare Kältemittel oder das schwach brennbare Kältemittel, das in der Außeneinheit abgedichtet einzuschließen ist, durch unterschiedliche Beförderungseinheiten befördert wird.

7. Verfahren nach Anspruch 1, wobei die lastseitige Vorrichtung (9) eine Inneneinheit zum Klimatisieren eines Innenraums ist, oder ein Gefriergerät oder ein Kühlschrank zum Gefrieren von Lebensmitteln ist.

8. Kältemittel-nutzende-Vorrichtung, umfassend:
einen Kältemittelkreislauf, aufweisend:
eine Außeneinheit (50), die ein Kältemittelkreislaufkomponententeil einer Außeneinheit (50) einschließlich einen Verdichter (1), einen Außenwärmetauscher (3), einen Entspanner (4) und ein Flüssigkeitsreservoir (5), in dem ein nicht brennbares Kältemittel versiegelt ist, umfasst, wobei der Kältemittelkreislaufkomponententeil einer Außeneinheit (50) ferner ein Vierwegeventil (2), ein Gasleitungsverbindungsventil (6) und ein Flüssigkeitsleitungsverbindungsventil (7) umfasst, und
eine Inneneinheit (60), die eine lastseitige Vorrichtung (9) umfasst, die mit dem Kältemittelkreislaufkomponententeil der Außeneinheit (50) mittels einer Gasverlängerungsleitung (10) und einer Flüssigkeitsverlängerungsleitung (11) verbunden ist; und
enthalten von dem Gasleitungsverbindungsventil (6), einen ersten Leitungsverbindungsanschluss (6a), die mit einer inneren Leitung der Außeneinheit (50) verbunden ist, einen zweiten Leitungsverbindungsanschluss (6b) zur Verbindung mit der Verlängerungsleitung (10), einem Kältemittelabdichtungsverbindungsanschluss (6c) zum Versiegeln eines Kältemittels und einem ersten und einem zweiten Schaltventil (6d, 6e), die geeignet sind, geöffnet und geschlossen zu werden,
wobei, wenn das erste Schaltventil (6d) geöffnet wird, die erste Leitungsverbindungsanschluss (6a) und der zweite Leitungsverbindungsanschluss (6b) miteinander kommunizieren, und
wobei, wenn das zweite Schaltventil (6e) geöffnet wird, der zweite Leitungsverbindungsanschluss (6b) und der Kältemittelabdichtungsverbindungsanschluss (6c) miteinander kommunizieren.

## Revendications

1. Procédé pour installer un appareil utilisant un réfrigérant, le procédé comprenant :
le chargement de façon hermétique d'un réfrigérant non combustible dans une partie composante de circuit de réfrigérant d'une unité extérieure (50), le transport de l'unité extérieure (50) à partir d'une usine, et l'installation de l'unité extérieure (50) ;
le raccordement de la partie composante de circuit de réfrigérant de l'unité extérieure installée (50) à un appareil côté charge (9) d'une unité intérieure (60) par raccordement du tuyau d'extension de liquide (11) à une soupape de raccordement de tuyau de liquide (7) de l'unité extérieure (50) et à un orifice de raccordement de tuyau de liquide (13) de l'unité intérieure (60), dans lequel la soupape de raccordement de tuyau de liquide (7) comprend une soupape de commutation (7d) dans un état ouvert à fond, et par raccordement du tuyau d'extension de gaz (10) à une soupape de raccordement de tuyau de gaz (6) de l'unité extérieure (50) et à un orifice de raccordement de tuyau de gaz (12) de l'unité intérieure (60), dans lequel la soupape de raccordement de tuyau de gaz (6) comprend une première soupape de commutation (6d) et une seconde soupape de commutation (6e) dans un état fermé à fond, formant ainsi un circuit de réfrigérant ;
le raccordement d'une pompe à vide à l'appareil côté charge (9) auquel sont raccordés les tuyaux d'extension (10, 11) par raccordement de la pompe à vide à un orifice de raccordement (6c) de la soupape de raccordement de tuyau de gaz (6),
l'ouverture de la seconde soupape de commutation (6e) de la soupape de raccordement de tuyau de gaz (6),
la mise à vide de l'appareil côté charge (9) et des tuyaux d'extension (10, 11) ;
la fermeture de la seconde soupape de commutation (6e) de la soupape de raccordement de tuyau de gaz (6) et la séparation de la pompe à vide,
le raccordement d'un récipient contenant un réfrigérant combustible ou un réfrigérant légèrement combustible à l'appareil côté charge (9) par raccordement du récipient à l'orifice de raccordement (6c) de la soupape de raccordement de tuyau de gaz (6), et
le chargement de façon hermétique du réfrigérant combustible ou du réfrigérant légèrement combustible dans l'appareil côté charge (9) et les tuyaux d'extension (10, 11) par ouverture de la seconde soupape de commutation (6e) de la soupape de raccordement de tuyau de gaz (6) ; et
après chargement de façon hermétique du réfrigérant combustible ou du réfrigérant légèrement combustible dans l'appareil côté charge et les tuyaux d'extension, la fermeture de la seconde soupape de commutation (6e) de la soupape de raccordement de tuyau de gaz (6), et
la mise en communication mutuelle de l'appareil côté charge (9), des tuyaux d'extension (10, 11) et de la partie composante de circuit de réfrigérant de l'unité extérieure (50) par ouverture de la première soupape de commutation (6d) de la soupape de raccordement de tuyau de gaz (6) et de la soupape de commutation (7d) de la soupape de raccordement de tuyau de liquide (7), de sorte que le réfrigérant puisse circuler à travers l'appareil côté charge (9), les tuyaux d'extension (10, 11) et la partie composante de circuit de réfrigérant.

2. Procédé selon la revendication 1, dans lequel la quantité de réfrigérant non combustible qui est hermétiquement chargée dans les parties composantes du circuit de réfrigérant de l'unité extérieure (50) est déterminée de sorte que la pression du réfrigérant non combustible soit supérieure ou égale à la pression atmosphérique.

3. Procédé selon la revendication 1 ou 2, dans lequel le réfrigérant combustible ou le réfrigérant légèrement combustible est un réfrigérant HC tel que le propane, le butane ou l'isobutane, ou un réfrigérant HFC tel que le HF0 1 234yf.

4. Procédé selon l'une quelconque des revendications 1 à 3, dans lequel le réfrigérant non combustible est un réfrigérant HFC tel que le R410A et le R407C, ou un réfrigérant naturel tel que le CO₂.

5. Procédé selon l'une quelconque des revendications 1 à 4, comprenant en outre une partie indiquant, sur une surface d'un matériau d'emballage utilisé pour emballer l'unité extérieure (50) ou une paroi extérieure de l'unité extérieure (50), que l'unité extérieure (50) est transportée depuis une usine pendant que le réfrigérant non combustible est hermétiquement chargé dans l'unité extérieure (50) et que le réfrigérant combustible ou le réfrigérant légèrement combustible est hermétiquement chargé dans l'unité extérieure (50) lorsque l'unité extérieure est installée sur un lieu d'utilisation et utilisée.

6. Procédé selon l'une quelconque des revendications 1 à 5, dans lequel, lorsque l'unité extérieure (50) est acheminée, l'unité extérieure (50) et un récipient contenant le réfrigérant combustible ou le réfrigérant légèrement combustible destiné à être hermétiquement chargé dans l'unité extérieure (50) sont acheminés par des unités d'acheminement différentes.

7. Procédé selon la revendication 1, dans lequel l'appareil côté charge (9) est une unité intérieure destinée à climatiser un espace intérieur, ou un congélateur ou un réfrigérateur destiné à congeler des aliments.

8. Appareil utilisant un réfrigérant, comprenant :
un circuit de réfrigérant comprenant :
une unité extérieure (50) qui comprend une partie composante de circuit de réfrigérant d'une unité extérieure (50) comprenant un compresseur (1), un échangeur de chaleur extérieur (3), un décompresseur (4) et un réservoir de liquide (5) dans lequel un réfrigérant non combustible est hermétiquement chargé, la partie composante de circuit de réfrigérant d'une unité extérieure (50) comprenant en outre une soupape à quatre voies (2), une soupape de raccordement de tuyau de gaz (6) et une soupape de raccordement de tuyau de liquide (7), et
une unité intérieure (60) qui comprend un appareil côté charge (9) qui est raccordé à la partie composante de circuit de réfrigérant de l'unité extérieure (50) au moyen d'un tuyau d'extension de gaz (10) et d'un tuyau d'extension de liquide (11) ; et
compris dans la soupape de raccordement de tuyau de gaz (6), un premier orifice de raccordement de tuyau (6a) raccordé à un tuyau intérieur de l'unité extérieure (50), un second orifice de raccordement de tuyau (6b) destiné à être raccordé au tuyau d'extension (10), un orifice de raccordement hermétique de réfrigérant (6c) pour le chargement de façon hermétique d'un réfrigérant, et une première et une seconde soupape de commutation (6d, 6e) aptes à être ouvertes et fermées,
dans lequel, lorsque la première soupape de commutation (6d) est ouverte, le premier orifice de raccordement de tuyau (6a) et le second orifice de raccordement de tuyau (6b) communiquent l'un avec l'autre, et
dans lequel, lorsque la seconde soupape de commutation (6e) est ouverte, le second orifice de raccordement de tuyau (6b) et l'orifice de raccordement hermétique de réfrigérant (6c) communiquent l'un avec l'autre.
